# EUROPÄISCHE PATENTANMELDUNG

(11) **EP 1 349 047 A2**
(43) Veröffentlichungstag der Anmeldung: **01.10.2003**
(21) Anmeldenummer: 02010779.3
(22) Anmeldetag: 15.05.2002
(51) Int. Cl.: G06F 1/16

(54) **Tragbares Kommunikationsgerät mit einem Display und einem Bedienblock**

(30) Priorität: 30.03.2002 EP 02007448
(71) Anmelder: Siemens Schweiz AG, 8047 Zürich (CH)
(72) Erfinder: Wittlinger, Christoph, 8047 Zürich (CH)

(57) **Zusammenfassung**

Der Erfindung liegt die Aufgabe zugrunde, ein mobiles Kommunikationsgerät anzugeben, mit dem eine Vielzahl unterschiedlicher Betriebsarten und Funktionen ausführbar sind und dessen Bedienung trotzdem mit nur wenigen Bedienelementen in annähernd selbsterklärender Weise vorgenommen werden kann.

Erfindungsgemäss ist ein tragbares Kommunikationsgerät mit einem Display und einem Bedienblock vorgesehen, bei dem verschiedene von einem Benutzer vorgebbare und/oder aufgrund der Beschaltung vorgegebene selbsteinstellende Betriebsmodi vorgesehen sind, wobei für jeden Betriebsmodus eine spezifische Belegung des Bedienblocks definiert ist und entsprechend dem gerade aktuellen Betriebsmodus die zugehörige Belegung des Bedienblocks aktiviert ist und eine ansonsten tastaturlose Steuerung und Navigation durch die verschiedenen Betriebsmodi des Geräts vorgesehen ist.

Auf diese Weise ist es dem Benutzer des Kommunikationsgeräts ermöglicht, die Funktionen und Betriebsmodi des Geräts nur anhand einiger weniger Bedienelemente des Bedienblocks zu steuern und dabei weitgehend selbsterklärend immer auf - soweit es die Funktionalität des gerade aktuellen Betriebsmodus es zulässt -die gleichen Bedienelemente des Bedienblocks trotz unterschiedlicher Bedienmodi zugreifen zu können. Eine für die Benutzungsattraktivität und Simpliziät der Bedienung besonders geeignete Ausgestaltung sieht es vor, dass der Bedienblock eine Taumelscheibe und eine Anzahl diese Taumelscheibe satellitenartig umgebender Tasten umfasst. Auf diese Weise ist sogar eine einhängige Steuerung des Kommunikationsgeräts erreicht, die im besonderen die Navigation durch die Taumelscheibe in selbsterklärender Weise bietet und durch geeignete Belegung der die Taumelscheibe umgebenden Tasten vergleichsweise feste für die verschiedenen Betriebsmodi im wiederkehrende Funktionen erlaubt.

## Beschreibung

Die Erfindung bezieht sich auf ein tragbares Kommunikationsgerät mit einem Display und einem Bedienblock.

Ein derartiges tragbares Kommunikationsgerät ist beispielsweise aus der europäischen Patentanmeldung EP 0 737 908 A1 bekannt. Dieses tragbare Informationsgerät kann wahlweise mit einem Kabel oder drahtlos an ein wie auch immer geartetes Datenverarbeitungssystem angekoppelt werden kann. Mit diesem Gerät ist es dann ermöglicht, Zustanddaten des Datenverarbeitungssystems zu betrachten und per Fernbetriebstechnik (Remote-Control) in diesem Datenverarbeitungssystem vorliegende Fehler analysieren und korrigieren zu können. Nachteilig ist es bei dem dort offenbarten Gerät, dass es nur auf wenige und speziell dafür vorgesehene Datenverarbeitungsgeräte anwendbar ist.

Ein in dem amerikanischen Patent 5,812,930 offenbartes Informationsgerät vermeidet diesen Nachteil, weil es bei diesem Gerät der zentrale Erfindungsgedanke ist, über mindestens einen unidirektionalen breitbandigen und mindestens einen bidirektionalen schmalbandigen Übertragungkanal zu verfügen. Dabei ist es ein zwingendes Feature der dort offenbarten Erfindung, dass das Informationsgerät in Abhängigkeit von der zu übertragenden und/oder zu empfangenden Information selbst entscheidet über welche der vorhandenen Übertragungskanäle der Datentransfer vorgenommen wird. Es ist so durch die Verwendung von standardisierten Übertragungsprotokollen, wie z.B. TCP/IP, möglich, das Informationsgerät an verschiedene externe Geräte, die an einem entsprechenden Netzwerk angeschlossen sind, anzukoppeln. Ebenso erlaubt dieses Informationsgerät die Darstellung von TV-Programmen und von einer in einem externen System vorhandenen Video- oder DVD-Cassette, deren Daten bestimmungsgemäss nur über den breitbandigen Übertragungskanal zugeführt werden können.

Mit der zunehmenden Vielfalt von Funktionen und Bedienprogrammen auf derartigen mobilen Kommunikationsgeräten steigen auch die Anforderungen ständig, dass derartige Kommunikationsgeräte einfach und nahezu selbsterklärend vom Benutzer bedient werden können. Bei einem Mobiltelefon beispielsweise sind ein alphanumerischer Tastenblock und verschiedene Menütasten vorgesehen, deren Belegung je nach einem gerade gewählten Menüpunkt variieren können. Die der Belegung entsprechenden Funktionen, die mit den Menütasten ausgelöst werden können, werden dabei im Display des Mobiltelefons mehr oder weniger selbsterklärend durch aussagekräftige Symbole oder Text angezeigt.

Diese Vorgehensweise ist bei einem Mobiltelefon aufgrund der begrenzten Funktionalität noch gerade geeignet, um das Gerät noch ohne grösseren Aufwand, d.h. ohne einen in der Regel unliebsamen Rückgriff auf die Bedienungsanleitung, bedienen zu können. Bei komplexeren Geräten, wie zum Beispiel einem Personal Digital Assistant (PDA) oder einem Web Pad oder einem Tablett PC, bestehen derzeit keine geeigneten Lösungen, die Geräte über eine geringe Anzahl von Eingabe- und Bedienelementen selbsterklärend benutzen zu können.

Der Erfindung liegt daher die Aufgabe zugrunde, ein mobiles Kommunikationsgerät anzugeben, mit dem eine Vielzahl unterschiedlicher Betriebsarten und Funktionen ausführbar sind und dessen Bedienung trotzdem mit nur wenigen Bedienelementen in annähernd selbsterklärender Weise vorgenommen werden kann.

Diese Aufgabe wird erfindungsgemäss dadurch gelöst, dass ein tragbares Kommunikationsgerät mit einem Display und einem Bedienblock vorgesehen ist, bei dem verschiedene von einem Benutzer vorgebbare und/oder aufgrund der Beschaltung vorgegebene selbsteinstellende Betriebsmodi vorgesehen sind, wobei für jeden Betriebsmodus eine spezifische Belegung des Bedienblocks definiert ist und entsprechend dem gerade aktuellen Betriebsmodus die zugehörige Belegung des Bedienblocks aktiviert ist und eine ansonsten tastaturlose Steuerung und Navigation durch die verschiedenen Betriebsmodi des Geräts vorgesehen ist.

Auf diese Weise ist es dem Benutzer des Kommunikationsgeräts ermöglicht, die Funktionen und Betriebsmodi des Geräts nur anhand einiger weniger Bedienelemente des Bedienblocks zu steuern und dabei weitgehend selbsterklärend immer auf - soweit es die Funktionalität des gerade aktuellen Betriebsmodus zulässt -die gleichen Bedienelemente des Bedienblocks trotz unterschiedlicher Bedienmodi zugreifen zu können.

Eine für die Benutzungsattraktivität und Simplizität der Bedienung besonders geeignete Ausgestaltung der Erfindung sieht es vor, dass der Bedienblock eine Taumelscheibe und eine Anzahl diese Taumelscheibe satellitenartig umgebender Tasten umfasst. Auf diese Weise ist sogar eine einhängige Steuerung des Kommunikationsgeräts erreicht, die im besonderen die Navigation durch die Taumelscheibe in selbsterklärender Weise bietet und durch geeignete Belegung der die Taumelscheibe umgebenden Tasten vergleichsweise feste für die verschiedenen Betriebsmodi immer wiederkehrende Funktionen erlaubt.

Im besonderen für die gute Handhabbarkeit des Kommunikationsgeräts und für die Eignung als Mittel für einen drahtlosen Internet-Zugriff ist es besonders zweckmässig, wenn das Display rechteckig ausgestaltet ist und von einem Rahmen umgeben ist, in den der Bedienblock integriert ist. Durch die Bedienung des Kommunikationsgeräts am Bedienblock wird daher die Darstellung auf dem Display nicht beeinträchtigt und zugleich kann das Kommunikationsgerät bei der Bedienung am Rahmen gehalten werden. Diese Eigenschaft wird dabei besonders gut konstruktiv umgesetzt, wenn der Bedienblock bezogen auf das liegend angeordnete Display am rechten, oberen Teil des Rahmens, vorzugsweise an einer ergonomisch ausgestalteten Ausbuchtung des Rahmens, angeordnet ist. Entsprechend kann für Linkshänder eine Anordnung am linken, oberen Teil des Rahmens vorgesehen sein. Durch die Ausbuchtung wird daher eine Art Hebel erzielt, wodurch das Gerät zum Halten in der Handfläche ruht und mittels des Daumens bedient werden kann.

Alternativ ist es natürlich auch möglich, das Display rechteckig und über die Oberfläche bedienbar auszugestalten und den Bedienblock virtuell auf dem Display eingeblendet zu realisieren. Eine derartige Ausgestaltung könnte sich besonders für den Einsatz in schwierigem Umfeld (Nässe, Feuchtigkeit, Staub) anbieten, wenn das Innenleben des Kommunikationsgeräts hermetisch von der Umgebung abgeschlossen sein muss. Ein Wärmeaustausch könnte bei einer solchen Ausgestaltung über eine in einem Luftstrom angeordnete Wärmetauschfläche realisiert sein. Um auch hier eine einhändige Bedienung gewährleisten zu können, könnte eine vom Betriebsmodus abhängige voreingestellte Anordnung des Bedienblocks vorgesehen sein, und zwar vorzugsweise unten rechts bezogen auf das liegende Display. Liegend heisst in diesem Zusammenhang, dass das Kommunikationsgerät so dem Benutzer zugewandt ist, dass das rechteckige Display ihm im Querformat entgegentritt. Entsprechend ist mit einem stehenden Display die Darstellung im Hochformat gemeint.

Die Bedienerfreundlichkeit und Übersichtlichkeit der Bedienung wird weiter stimuliert, wenn die Taumelscheibe von vier bezogen auf den Mittelpunkt der Taumelscheibe äquidistant angeordneten Tastenelementen umgeben ist. Dabei wird die der jeweiligen Geräteausrichtung zumindest mit zwei unterschiedlichen Belegungen folgende Bedienbarkeit besonders gut erreicht, wenn die Tastenelemente in den Richtungen NW, NO, SO und SW angeordnet sind, d.h. also jeweils auf den Diagonalen liegend angeordnet sind. Dieses Merkmal ist jedoch grundsätzlich immer schon dann erreicht, wenn die Anordnung der Tastenelemente im wesentlichen symmetrisch zur Taumelscheibe vorgesehen ist.

Für die Bedienung des Kommunikationsgeräts in verschiedenen räumlichen Ausrichtungen ist es besonders vorteilhaft, wenn die Belegung der Taumelscheibe und der Tastenelemente entsprechend der Ausrichtung des Displays folgt. So können es bestimmte Betriebsmodi, wie z.B. der E-Book-Mode, erforderlich machen, dass das Kommunikationsgerät eher mit stehendem Display verwendet wird (eine ganze Buchseite wird dargestellt). Um das Nachführen der Belegung der Taumelscheibe und der Tastenelemente nicht unnötig zu verkomplizieren, kann ein Mittel zur Erfassung der Ausrichtung des Displays und entsprechend der erfassten Ausrichtung je eine Belegung für den Fall des stehenden und für den Fall des liegenden Displays vorgesehen sein. Im Gerät wird daher die Ausrichtung des Geräts beobachtet und mit Überschreiten eines Grenzwertes für den Drehwinkel von der einen in die andere Belegung umgeschaltet.

Zur weiteren Steigerung des Bedienkomforts trägt es bei, wenn der Taumelscheibe und den Tastenelementen Mittel zugeordnet sind, welche eine Stärke des Betätigungsdrucks und/oder eine Zeitdauer der Betätigung erfassen und entsprechende Modifikationen einer entsprechend der Belegung zu steuernden Funktion veranlassen. Auf diese Weise können zum Beispiel die Geschwindigkeiten bei einer Funktion "Zoom-In" oder "Zoom-Out" verändert und dem Bestreben des Benutzer für eine Beschleunigung eines Zoom-Vorganges Unterstützung geleistet werden.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: in schematischer Darstellung eine Aufsicht auf ein mobiles Kommunikationsgerät mit einem Bedienblock;
- Figur 2: in schematischer Darstellung einen vergrösserten Ausschnitt aus dem mobilen Kommunikationsgerät gemäss Figur 1 im Bereich des Bedienblocks; und
- Figur 3: in schematischer Darstellung eine Aufsicht auf das von einem Benutzer gehaltenen mobile Kommunikationsgerät gemäss Figur 1.

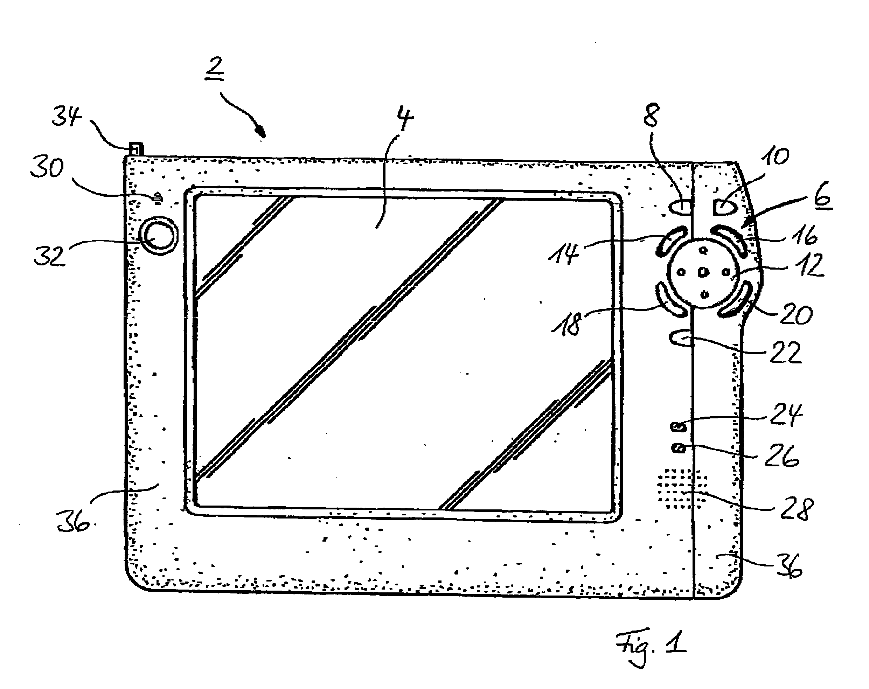

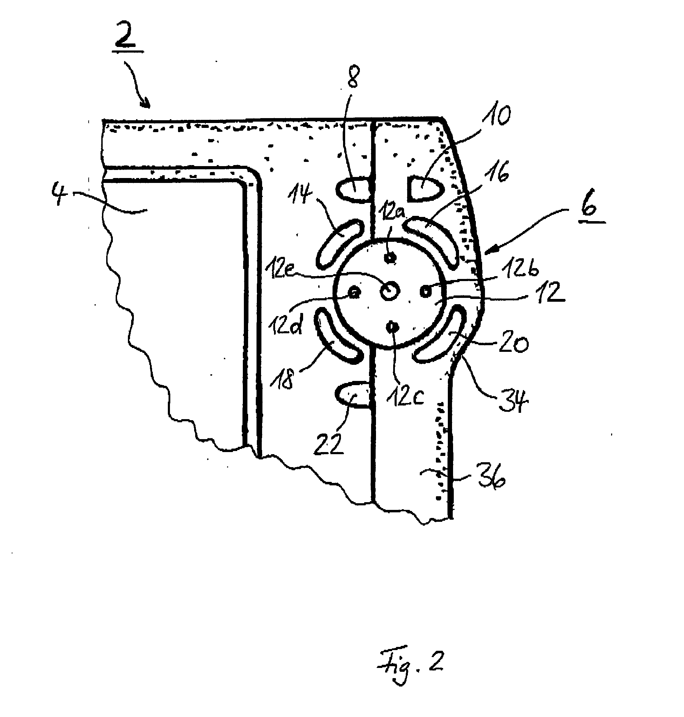

Figur 1 zeigt in schematischer Darstellung eine Aufsicht auf ein mobiles Kommunikationsgerät, welches nachfolgend als Thin-Client 2 bezeichnet wird. Die gezeigte Darstellung wird im wesentlichen von einem über die Oberfläche bedienbaren liegend ausgerichteten LCD-Flachbildschirms 4 beherrscht und lässt das Vorhandensein einiger weniger Bedien- und/oder Anzeigeelemente erkennen, die zusammengefasst als Bedienblock 6 bezeichnet werden. Dabei umfasst der Bedienblock 6 neben einem Ein/Aus-Schalter 8 und einer Taste 10 für die Software-Steuerung, die unter dem Betriebssystem Windows CE der rechten Maustaste entspricht, als wesentliche Bedienelemente eine Taumelscheibe 12, um die herum vier satellitenartig angeordnete Drucktasten 14 bis 20 symmetrisch angeordnet sind. Die Taumelscheibe 12 weist vier Druckpunkte oben, links, rechts und unten (12a bis 12d; vgl. Figur 2) auf. Zudem ist ein zentraler Druckpunkt 12e vorgesehen.

Unter der Taumelscheibe 12 mit ihren satellitenartig angeordneten Drucktasten 14 bis 20 liegend ist eine Tastatur-Ein/Aus-Taste 22 angeordnet, mit der eine Bildschirmtastatur ein-bzw. ausgeblendet werden kann. Zwei Leuchtdioden 24, 26 zeigen die Ladefunktion eines Energiespeichers bzw. den Betriebszustand des mobilen Thin-Clients 2 an. Ein Lautsprecher 28 und ein Mikrofon 30 sind für Audio-Zwecke, d.h. in der Regel Kommunikationszwecke, vorgesehen. Unterhalb des Mikrofons 30 ist zudem eine Camera 32 angeordnet, die vorliegend in CCD-Technik ausgeführt ist. Diese Camera 32 erlaubt die Übertragung von mit ihr aufgenommenen Bildern beispielsweise in einem Communicator-Mode. Auf diese Weise lässt sich mit dem Thin-Client 2 im Rahmen dieses Betriebsmodus ein sehr komfortables Bildtelefon verwirklichen.

Mit dem Drücken des Ein/Aus-Schalters 8 wird der Thin-Client 2 eingeschaltet und ein Startmenü, das vorliegend zehn elipsen-artige, hier jedoch nicht weiter dargestellte Schaltflächen aufweist, wird auf dem über die Oberfläche bedienbaren LCD-Touchscreen 4 eingeblendet. Mittels dieser Schaltflächen lassen sich diverse Betriebsmodi des mobilen Thin-Clients 2 durch das Tippen auf die entsprechende Schaltfläche aktivieren. Grundsätzlich kann jedoch auch ein mitgestartetes Programm die Beschaltung des mobilen Thin-Clients 2 prüfen und es in einen der Beschaltung entsprechenden Mode schalten, der nachfolgend aber vom Benutzer wie oben schon beschrieben mittels des Startmenüs noch geändert werden kann.

Mit einer der Schaltflächen werden beispielsweise alle laufenden Anwendungen beendet, eine andere Schaltfläche ruft die Hilfefunktion auf. Weitere Schaltflächen starten einen Setup-Modus, einen sogenannten InkWriter-Modus (elektronischer Notizblock, mit dem geschrieben und gezeichnet werden kann), einen Office-Modus (Textverarbeitung, Tabellenkalkulation, Bildschirmpräsentation und Datenbankanwendung, z.B. Microsoft Pocket-Office) und einen Personal-Assistent-Modus (Aufgaben, Kalender, Kontakte und Posteingang, z.B. Microsoft-Outlook). Dabei entspricht dieser Modus der weiter oben schon einmal genannten PDA-Funktionalität. Mit einer weiteren der Schaltflächen wird eine Internet-Verbindung aufgebaut, ein Web-Browser gestartet und eine voreingestellte Homepage geladen. Ebenfalls über eine der Schaltfläche aktivierbar wird der mobile Thin-Client 2 als Mobil-Telefon in einem Communicator-Modus und mittels einer weiteren der Schaltflächen in einem Video/TV-Modus betrieben. Zur Aktivierung der Schaltflächen dient neben dem Antippen mit der Fingerspitze (finger tip) auch ein seitlich im Gehäuse einsteckbarer Zeigestift 34 (pen).

Damit der Thin-Client 2 überhaupt über diese Vielzahl von verschiedenen Betriebsmodi gesehen einfach und selbsterklärend bedienbar bleibt, sind feste vorgegebene Belegungen der im Tastenblock 6 zusammengefassten Bedienelemente vorgesehen, die entsprechend dem gerade aktuellen Betriebsmodus aktivierbar sind.

Dabei werden eine Reihe von Belegungen für verschiedene Betriebsmodi nachfolgend beispielhaft erklärt:

**Tabelle 1:**

| Belegung des Bedienblocks im Grundmodus | | |
|---|---|---|
| **Normaler Grundmodus:** | | |
| **Taste** | **LCD-Bildschirm liegend** | **LCD-Bildschirm stehend** |
| 12a | Navigation nach oben | Navigation nach rechts |
| 12b | Navigation nach rechts | Navigation nach unten |
| 12c | Navigation nach unten | Navigatin nach links |
| 12d | Navigation nach links | Navigation nach oben |
| 12e 1x | Modus-Angabe und Auswahl | Modus-Angabe und Auswahl |
| 12e 2x | Belegung 90° drehen | Belegung 90° drehen |
| 14 | Voice/Push to talk (ptt) | Menutaste |
| 16 | Menütaste | Enter |
| 18 | Escape | Voice/Push to talk (ptt) |
| 20 | Enter | Escape |

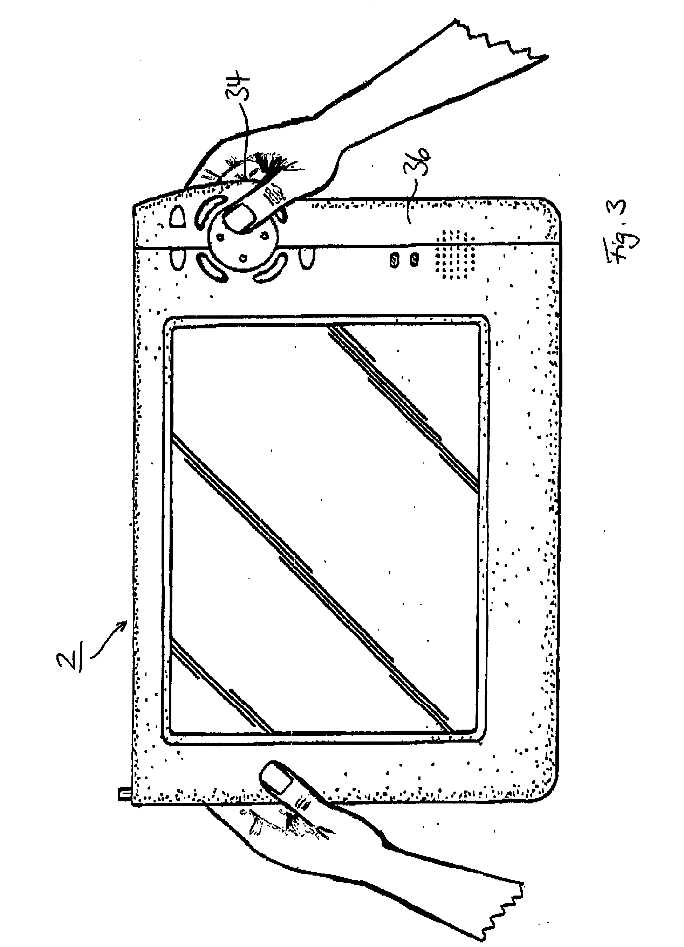

In der Tabelle 1 sind in der ersten Spalte die verschiedenen möglichen Tasten angegeben, die gemäss der zweiten Spalte mit den dort angegebenen Funktionalitäten für den liegenden Bildschirm 4 und gemäss der dritten Spalte mit den dort angegebenen Funktionalitäten für den stehenden Bildschirm 4 angegeben sind. Wenn nun der Bediener den Thin-Client 2 in seinen Händen hält, wie dies in Figur 3 dargestellt ist, erlaubt ihm zum einen eine ergonomisch ausgeführte Ausbuchtung 34 die bequeme Halterung des Thin-Clients 2 und zum anderen die einhändige Bedienung, für die eigentlich nur der Daumen der rechten Hand verwendet wird. Je nach dem eingestellten Modus kann der Thin-Client 2 dabei mit stehenden oder liegenden Display 4 verwendet sein und die Belegung des Bedienblocks kann entsprechend an die Ausrichtung angepasst werden, indem der Druckpunkt 12e zweimal gedrückt wird (vergleichbar mit doppeltem Mausklick). Über die in Tabelle 1 angegebene Belegung hinaus sind die Druckpunkte 12a bis 12d zusätzlich auch zum Scrollen des Content-Menüs geeignet, wenn das Menü aufgerufen worden ist.

Ein stehender Bildschirm 4 wird wohl eher beispielsweise im E-Book-Modus anzutreffen sein, bei dem in elektronischer Form Bücher und andere Printmedien, z.B. auch die Tageszeitung, dargestellt werden. Die Belegung des Bedienblocks 6 sieht für diesen Modus wie folgt aus:

| | |
|---|---|
| 12a bis 12d | Navigation und Kontext-Menü Scroll wie oben; |
| 18 und 14 | Push to talk bzw. Kontext-Menü wie oben; |
| 20 | Zoom In plus Menü:Escape |
| 16 | Zoom Out plus Menü:Enter |
| 12e 1x | Mode-Menü |
| 12e 2x | Belegung 90° drehen wie oben. |

Ein sinnvolle Belegung des Bedienblocks 6 für den Internet-Mode, d.h. zum Browsen im Internet, kann die folgende Verteilung aufweisen (Bildschirm liegend):

| | |
|---|---|
| 12a bis 12d | Navigation und Favoriten-Navigation; |
| 14 | Push to talk; |
| 16 | Favoritenliste einblenden |
| 18 | Zurück zur letzten Seite browsen |
| 20 | Vor zur nächsten Seite browsen |
| 12e 1x | Mode-Menü |
| 12e 2x | Belegung 90° drehen wie oben. |

Zusätzlich können die Tasten 18 und 20 hier mit entsprechenden Menüfunktionen überlagert werden, wenn mit einmaligem Drücken von dem Druckpunkt 12e das Modemenü aufgerufen worden ist. Derartige Menüfunktionen können "Escape Favorit" und "Enter Favorit" für die Tasten 18 bzw. 20 sein.

Ein nächster möglicher Mode kann ein Movie/TV-Modus sein, bei dem der Thin-Client 2 zur Wiedergabe von Filmen und Fernsehprogrammen verwendet wird. Die Belegung des Bedienblocks 6 hat dann die folgende Gestalt:

| | |
|---|---|
| 12a | Lautsprecher 28/Kopfhörer lauter |
| 12b | Programm vor |
| 12c | Lautsprecher 28/Kopfhörer leiser |
| 12d | Programm zurück |
| 16 und 12a bis 12d | Kontext-Menü scrollen |
| 14 | Push to talk; |
| 16 | Menü |
| 18 | Escape |
| 20 | Enter |
| 12e 1x | Mode-Menü |
| 12e 2x | Belegung 90° drehen wie oben. |

Ein weiterer Mode kann der sogenannte Communicator-Mode sein, bei dem der Thin-Client 2 als mobiles Telefon/Bildtelefon verwendet wird. Die Belegung hat dann die folgende Verteilung:

| | |
|---|---|
| 12a | Lautsprecher 28/Kopfhörer lauter |
| 12b | Camera Zoom Out |
| 12c | Lautsprecher 28/Kopfhörer leiser |
| 12d | Camera Zoom In |
| 16 und 12a bis 12d | Kontext-Menü scrollen |
| 14 | Push to talk, d.h. Annehmen und Auflegen |
| 16 | Menü |
| 18 | Escape |
| 20 | Enter |
| 12e 1x | Mode-Menü |
| 12e 2x | Belegung 90° drehen wie oben. |

Die Belegung des Druckpunktes 14 mit "push to talk" dient in diesem Modus natürlich in erster Linie zum Auf- oder Abbau einer Kommunikationsverbindung. Ansonsten, d.h. wenn kein Anruf getätigt oder entgegengenommen werden soll, steht die übliche zur Sprachsteuerung dienende Funktionalität der Pushto-talk-Taste 14 zur Verfügung. Damit ist es möglich, den Thin-Client 2 über die Spracherkennung zu steuern. Dabei kann zum Beispiel die Ansage "Bedienelemente" die aktuelle Belegung der Bedienelemente anzeigen lassen, die Ansage "Escape" kann entsprechend diese Anzeige wieder ausblenden.

Im Game-Mode könnte die Belegung des Bedienblocks 6 diese Gestalt haben:

| | |
|---|---|
| 12a bis 12d | Navigation durch das Spiel |
| 16 und 12a bis 12d | Kontext-Menü scrollen |
| 14 | Up |
| 16 | Down |
| 18 | Jump |
| 20 | Shoot |
| 12e 1x | Mode-Menü |
| 12e 2x | Belegung 90° drehen wie oben. |

In einem möglichen Video-Konferenz-Mode kann der Thin-Client 2 zur Steuerung einer externen Videokamera und zur Bildwiedergabe auf seinem LCD-Bildschirm 4 mit folgender Belegung verwendet sein:

| | |
|---|---|
| 12a bis 12d | Navigation Bildausschnitt |
| 16 und 12a bis 12d | Navigation durch das Kontext-Menü |
| 14 | Push to talk; Annehmen und Auflegen |
| 16 | Menü |
| 18 | Zoom-In plus Menü-Escape |
| 20 | Zoom-Out plus Menü-Enter |
| 12e 1x | Mode-Menü |
| 12e 2x | Belegung 90° drehen wie oben. |

Und natürlich ist auch ein direkt aufrufbarer Modus zur Veränderung der Geräteeinstellung denkbar mit folgender Belegung:

| | |
|---|---|
| 12a | Lautsprecher 28/Kopfhörer lauter |
| 12b | Bild heller |
| 12c | Lautsprecher 28/Kopfhörer leiser |
| 12d | Bild dunkler |
| 16 und 12a bis 12d | Kontext-Menü scrollen |
| 14 | Push to talk; |
| 16 | Kontext-Menü |
| 18 | Escape |
| 20 | Enter |
| 12e 1x | Mode-Menü |
| 12e 2x | Belegung 90° drehen wie oben. |

Zusammenfassend kann daher festgestellt werden, dass eine Reihe von Tasten bzw. Druckpunkten bei einem Wechsel von einem Betriebsmode zu einem anderen Betriebsmode vollkommen neue funktionelle Belegungen erhalten. Wiederum weisen andere Tasten bzw. Druckpunkte relativ konstant bestimmte in allen Betriebsmodi wiederkehrende Funktionen auf. Beispielhaft sei die Taste 16 genannt, mit der fast immer das Kontext-Menü aufgerufen wird und was dann in der Regel zu einer temporären Überlagerung der primären betriebsmodusbezogenen Belegung führt, wie z.B. Menü-Enter und Menü-Escape für die Tasten 20 bzw. 18 und die Navigations/Scroll-Möglichkeit für die Druckpunkte 12a bis 12d. Ergänzend können die einzelnen Druckpunkte und Taste auch noch mindestens zweistufig ausgestaltet sein, so dass sich unterschiedliche Geschwindigkeiten beispielsweise für die Navigation und das Zooming ergeben. Diese Mehrstufigkeit kann dabei entweder als zweites Druckniveau oder aber auch über eine von der Dauer der Druckeinwirkung abhängige Funktion ausgeführt sein.

Auf diese Weise ist für den Thin-Client 2 eine überaus bedienerfreundliche und selbsterklärende Bedienung geschaffen, die zudem aufgrund der ergonomisch gewählten Anordung des Bedienblocks 6 am Ort der Ausbuchtung 34 im Rahmen 36 eine einhändige Bedienung des Thin-Client erlaubt.

## Patentansprüche

1. Tragbares Kommunikationsgerät (2) mit einem Display (4) und einem Bedienblock (6), bei dem verschiedene von einem Benutzer vorgebbare und/oder aufgrund der Beschaltung vorgegebene selbsteinstellende Betriebsmodi vorgesehen sind, wobei für jeden Betriebsmodus eine spezifische Belegung des Bedienblocks (6) definiert ist und entsprechend dem gerade aktuellen Betriebsmodus die zugehörige Belegung des Bedienblocks (6) aktiviert ist und eine ansonsten tastaturlose Steuerung und Navigation durch die verschiedenen Betriebsmodi des Geräts (2) vorgesehen ist.

2. Tragbares Kommunikationsgerät nach Anspruch 1,
**dadurch gekennzeichnet, dass**
der Bedienblock (6) eine Taumelscheibe (12) und eine Anzahl diese Taumelscheibe (12) satellitenartig umgebender Tasten (14 bis 20) umfasst.

3. Tragbares Kommunikationsgerät nach Anspruch 1 oder 2,
**dadurch gekennzeichnet, dass**
das Display (4) rechteckig ausgestaltet ist und von einem Rahmen (36) umgeben ist, in den der Bedienblock (6) integriert ist.

4. Tragbares Kommunikationsgerät nach Anspruch 3,
**dadurch gekennzeichnet, dass**
der Bedienblock (6) bezogen auf das liegend angeordnete Display (4) am rechten, oberen Teil des Rahmens (36), vorzugsweise an einer ergonomisch ausgestalteten Ausbuchtung (34) des Rahmens (36), angeordnet ist.

5. Tragbares Kommunikationsgerät nach Anspruch 1 oder 2,
**dadurch gekennzeichnet, dass**
das Display (4) rechteckig und über die Oberfläche bedienbar ausgestaltet ist und der Bedienblock (6) virtuell auf dem Display (4) eingeblendet realisiert ist.

6. Tragbares Kommunikationsgerät nach Anspruch 5,
**dadurch gekennzeichnet, dass**
eine vom Betriebsmodus abhängige voreingestellte Anordnung des Bedienblocks (6) vorgesehen ist, vorzugsweise unten rechts bezogen auf das liegende Display (4).

7. Tragbares Kommunikationsgerät nach einem Ansprüche 2 bis 6, **dadurch gekennzeichnet, dass**
die Taumelscheibe (12) von vier bezogen auf den Mittelpunkt der Taumelscheibe (12) äquidistant angeordneten Tastenelemente (14 bis 20) umgeben ist.

8. Tragbares Kommunikationsgerät nach Anspruch 7,
**dadurch gekennzeichnet, dass**
die Tastenelemente (14 bis 20) in den Richtungen NW, NO, SO und SW angeordnet sind.

9. Tragbares Kommunikationsgerät nach einem der Ansprüche 2 bis 8, **dadurch gekennzeichnet, dass**
die Belegung der Taumelscheibe (12) und der Tastenelemente (14 bis 20) entsprechend der Ausrichtung des Displays (4) folgt.

10. Tragbares Kommunikationsgerät nach Anspruch 9,
**dadurch gekennzeichnet, dass**
Mittel zur Erfassung der Ausrichtung des Displays (4) vorgesehen sind und entsprechend der erfassten Ausrichtung je eine Belegung für den Fall des stehenden und für den Fall des liegenden Displays (4) vorgesehen sind.

11. Tragbares Kommunikationsgerät nach einem der Ansprüche 2 bis 10, **dadurch gekennzeichnet, dass**
der Taumelscheibe (12) und den Tastenelementen (14 bis 20) Mittel zugeordnet sind, welche eine Stärke des Betätigungsdrucks und/oder eine Zeitdauer der Betätigung erfassen und entsprechende Modifikationen einer entsprechend der Belegung zu steuernden Funktion veranlassen.
